Europäisches Patentamt

European Patent Office

Office européen des brevets

(11) Numéro de publication: **0 197 581**
**B1**

(12) **FASCICULE DE BREVET EUROPEEN**

(51) Int. Cl.⁴: **B 29 C 47/04**, B 29 C 47/14

(45) Date de publication du fascicule du brevet:
**01.06.88**

(21) Numéro de dépôt: **86200464.5**

(22) Date de dépôt: **20.03.86**

(54) Bloc d'alimentation pour filière plate de coextrusion.

(30) Priorité: **01.04.85 FR 8505029**

(43) Date de publication de la demande:
**15.10.86 Bulletin 86/42**

(45) Mention de la délivrance du brevet:
**01.06.88 Bulletin 88/22**

(84) Etats contractants désignés:
**AT BE CH DE FR GB IT LI NL SE**

(56) Documents cités:
**DE - B - 1 198 537**
**DE - B - 1 665 805**
**FR - A - 1 501 068**
**FR - A - 1 531 130**
**FR - A - 2 307 629**
**US - A - 4 395 212**

(73) Titulaire: **SOLVAY & Cie (Société Anonyme), Rue du Prince Albert, 33, B-1050 Bruxelles (BE)**

(72) Inventeur: **Dehennau, Claude, Chemin des Postes, 236, B-1410 Waterloo (BE)**
Inventeur: **Kerger, Marc, Avenue G.E. Lebon, 124, B-1160 Bruxelles (BE)**

ACTORUM AG

## Description

La présente invention concerne un bloc d'alimentation pour filière plate de coextrusion (voir le préambule de la revendication 1) dont la mise au point est aisée et qui permet facilement des changements de types de fabrication.

Pour réaliser des structures multicouches telles que des films, des feuilles ou des plaques, on utilise notamment des filières plates qui sont raccordées à un bloc d'alimentation qui assure la répartition des différentes couches de matières thermoplastiques fondues devant être introduites dans la filière pour obtenir la structure souhaitée.

En général, voir par exemple FR-A-1531130, un bloc d'alimentation est constitué par une série d'éléments répartiteurs de flux de matière thermoplastique et comporte un canal central comprenant une entrée raccordée à une première source de matière thermoplastique fondue et une sortie raccordée à la filière plate de coextrusion et au moins un canal secondaire comprenant une entrée raccordée à une seconde source de matière thermoplastique fondue, un tore de répartition entourant le canal central et une sortie raccordée avec le canal central, en amont de la filière plate de coextrusion, dans lequel le canal central, au niveau du raccordement avec au moins un canal secondaire, est équipé d'un méplat modifiant sa section.

Au sein du bloc d'alimentation, l'âme constituée par la matière thermoplastique débitée au travers du canal central est recouverte partiellement ou totalement de couches de matières thermoplastiques successives introduites via les canaux secondaires. Dans le cas de réalisation le plus simple, le flux thermoplastique traversant le bloc d'alimentation présente une structure stratifiée de symétrie cylindrique, évoluant d'amont en aval en fonction du nombre de canaux secondaires et partant du nombre de flux thermoplastiques secondaires rencontrés.

En raison des caractéristiques rhéologiques différentes de matières thermoplastiques généralement mises en œuvre, il est fréquent qu'une symétrie cylindrique de ce type ne constitue pas la configuration optimale pour un flux thermoplastique composite alimentant une filière plate de coextrusion en vue de la production d'une structure stratifiée plane déterminée.

Il a, en effet, été constaté par l'expérience que pour nombre de combinaisons envisagées pour des flux thermoplastiques composites il est nécessaire de modifier sensiblement la géométrie du flux polymérique central en amont d'une ou de plusieurs zones de confluence au sein d'un bloc d'alimentation.

A titre d'exemple, on peut citer l'étalement transversal d'un flux principal par passage au travers d'un méplat de configuration appropriée, dont la géométrie de sortie, d'allure générale rectangulaire, biconcave ou biconvexe, peut comporter des congés imposés par des contraintes d'usinage, par la nature et la rhéologie de matériaux thermoplastiques à associer.

Il est évident qu'une géométrie de méplat adaptée à l'élaboration d'une structure multicouche déterminée ne convient pas nécessairement à la mise en forme d'une structure stratifiée différente, soit du fait des épaisseurs relatives des différents constituants ou encore du fait de la nature même des constituants.

Lors de la mise au point de la production d'une structure stratifiée donnée ou lors d'un changement de production, il est donc nécessaire de pouvoir modifier un ou plusieurs méplats, ce qui impose généralement des arrêts et des nettoyages coûteux. Il peut, en outre, en cours de fonctionnement, s'avérer nécessaire de remplacer un méplat par un autre de géométrie identique en raison d'un encrassement survenu en cours de fabrication.

La présente invention a pour but de fournir un bloc d'alimentation pour filière plate de coextrusion qui permet, en cours de fonctionnement, de changer un ou plusieurs méplats sans subir les inconvénients précités.

L'invention concerne dès lors un bloc d'alimentation pour filière plate de coextrusion comportant un canal central comprenant une entrée raccordable à une première source d'alimentation en matière thermoplastique fondue, une sortie raccordable à la filière plate de coextrusion et au moins un canal secondaire comprenant une entrée raccordable à une seconde source de matière thermoplastique fondue, un tore de répartition entourant le canal central et une sortie raccordée avec le canal central en amont de la filière plate d'extrusion dans lequel le canal central au niveau du raccordement avec au moins un canal secondaire est équipé d'un méplat modifiant sa section qui se caractérise en ce que le méplat est monté dans une pièce amovible coaxiale au canal central et disposée dans un conduit de guidage interceptant le canal central et traversant de part en part le bloc d'alimentation, ledit bloc d'alimentation étant, en outre, équipé de moyens permettant l'extraction progressive de la pièce amovible via le conduit de guidage et son remplacement par une autre pièce amovible équipée d'un méplat préalablement introduite dans le conduit de guidage.

Selon un mode de réalisation préférentiel, le moyen permettant l'extraction de la pièce amovible est constitué par un extracteur. Avantageusement, cet extracteur peut être équipé de mâchoires mobiles coopérant avec des encoches prévues dans la pièce amovible à extraire.

Par ailleurs le moyen permettant le remplacement de la pièce amovible est avantageusement constitué par un poussoir pneumatique ou hydraulique contrôlable se déplaçant selon l'axe du conduit de guidage.

Il est bien évident que les pièces amovibles introduites successivement dans le conduit de guidage en vue d'être successivement substituées à la pièce amovible en service peuvent être équipées de méplats de configuration géométriques identiques ou différentes selon les cas.

Dans le bloc d'alimentation conforme à l'invention, il est également évident que l'on peut prévoir la possibilité d'échanger des pièces amovibles équipées de méplats au niveau du raccordement du canal central avec un ou plusieurs canaux secondaires.

Avec le bloc d'alimentation conforme à l'invention, lorsqu'il s'avère utile pour une raison quelconque de changer ou de modifier un méplat, il suffit d'introduire dans le canal de guidage approprié une pièce amovible équipée d'un méplat souhaité et ensuite par l'intermédiaire du moyen de remplacement d'amener cette pièce en service, la pièce mise hors service pouvant être alors extraite du conduit de guidage.

Il est bien évident que la géométrie du conduit de guidage, en particulier sa section, doit correspondre à la géométrie des pièces amovibles en vue d'éviter toute fuite de matière thermoplastique. En particulier, les pièces amovibles peuvent être équipées d'un système quelconque de joint assurant une étanchéité parfaite en fonctionnement. En général, la section du conduit de guidage et partant des pièces amovibles est de préférence rectangulaire. Selon une variante de réalisation qui est préférée, le conduit de guidage est perpendiculaire à l'axe du canal central du bloc d'alimentation.

Les pièces amovibles peuvent être réalisées en une ou plusieurs parties, notamment en fonction des impératifs d'usinage.

Selon un mode de réalisation qui est préféré, le conduit de guidage, dans sa portion permettant l'introduction de pièces amovibles, est équipé de moyens de chauffage électriques ou autres, de façon à permettre une mise à température adéquate des pièces amovibles successives avant leur mise en service. Il peut aussi se révéler intéressant de prévoir dans le conduit de guidage des moyens permettant une mise sous vide des pièces amovibles avant leur mise en service de façon à minimiser toute entrée d'air dans les matières thermoplastiques débitées lors d'un changement de pièce amovible.

En outre, le conduit de guidage peut avantageusement être équipé de moyens tels que des butées escamotables assurant un verrouillage en place de la pièce amovible en service.

Afin de limiter les perturbations de fonctionnement lors d'un changement de pièce amovible, il convient d'opérer ce changement de façon rapide. A cet effet, on préfère généralement que le poussoir assurant cet échange se déplace à une vitesse linéaire d'au moins 5 cm/sec.

A cet effet, il s'avère également utile de concevoir les pièces amovibles de façon telle que les perturbations d'écoulement soient minimisées lors d'un changement de pièce amovible, et ce notamment en réduisant au minimum la dimension de ces pièces dans la direction de leur déplacement.

Il est toutefois possible d'effectuer le changement de pièce amovible à une vitesse très faible si l'on interrompt les alimentations en matière thermoplastique fondue durant ce changement.

En outre, afin d'éviter tout incident en cas de blocage fortuit d'une pièce amovible dans le conduit de guidage, il peut s'avérer utile de prévoir un moyen d'alarme détectant ce type de défaut de fonctionnement. Ce dispositif d'alarme peut, en outre, être conçu de façon à éventuellement interrompre, directement ou après un temps déterminé, les alimentations en matières thermoplastiques fondues du bloc d'alimentation.

Avec le bloc d'alimentation conforme à l'invention il est possible d'alimenter une filière plate de coextrusion avec un flux composite de matières thermoplastiques fondues de toutes natures et sous n'importe quelle configuration géométrique sans interrompre un cycle de fabrication.

Le bloc d'alimentation conforme à l'invention est, en outre, explicité plus en détail dans la description qui va suivre d'un mode de réalisation pratique possible. Dans cette description on se référera aux figures des dessins annexés dans lesquels:

la fig. 1 est une vue en élévation et en coupe d'un bloc d'alimentation conforme à l'invention;

la fig. 2 est une vue en profil droit des pièces amovibles de la fig. 1 selon l'axe AA';

la fig. 3 est une vue en profil gauche des pièces amovibles de la fig. 1 selon l'axe BB';

les fig. 4 et 5 sont respectivement des vues en perspective amont et aval d'une pièce amovible utilisée dans le bloc d'alimentation de la fig. 1.

Ainsi qu'il apparaît aux figures, le bloc d'alimentation 1 selon l'invention, dont on n'a reproduit que les éléments essentiels nécessaires pour comprendre l'invention, comprend un canal central 2 dont l'entrée 3 est raccordée à une source de matière thermoplastique fondue non représentée et dont la sortie 4 est raccordée à une filière plate de coextrusion également non représentée et un canal secondaire 5 dont l'entrée 6 est raccordée à une seconde source de matière thermoplastique fondue non représentée.

Le canal secondaire 5 débouche d'abord dans un tore de répartition 7 équipé d'un anneau de réglage 8 conventionnel dont la position est contrôlable au moyen de boulons de réglage 9. Ainsi qu'il est de pratique courante, le tore de répartition 7 est incliné par rapport à l'axe du canal central 2 et présente une section qui décroît progressivement, la section maximum étant située en regard de son alimentation en matière thermoplastique fondue et sa section minimum étant située à 180° de la section maximum.

La matière thermoplastique fondue débitée dans le tore d'alimentation 7 s'écoule par le canal secondaire dans sa portion 10 qui entoure le canal central 2 et est ensuite appliquée sur le flux de matière thermoplastique fondue débité par le canal central 2. Ainsi qu'il est de pratique courante, le flux de matière thermoplastique fondue de section circulaire débité par le canal central 2 est étalé par l'intermédiaire d'un méplat 11 de profil approprié en amont de son point de rencontre avec le flux de matière thermoplastique fondue débité par le canal secondaire 10.

Conformément à l'invention, le méplat 11 est monté dans une pièce amovible 12 coaxiale au canal central 2 et disposée dans un conduit de guidage 13 interceptant le canal central 2 et traversant de part en part le bloc d'alimentation 1 au niveau du raccordement du canal central 2 avec le canal secondaire 10.

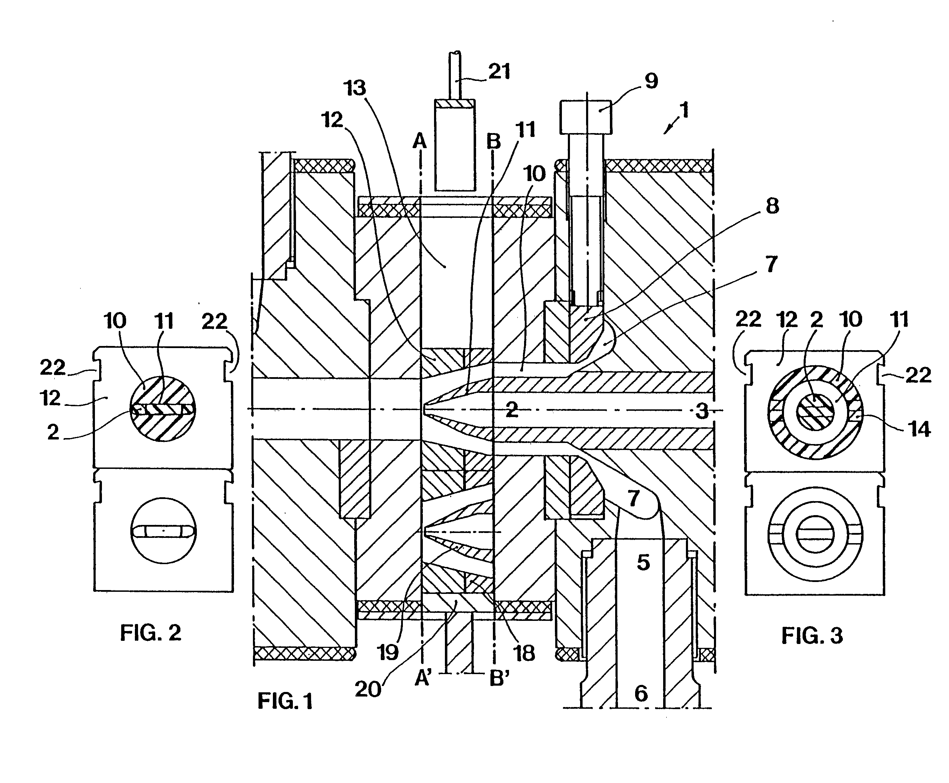

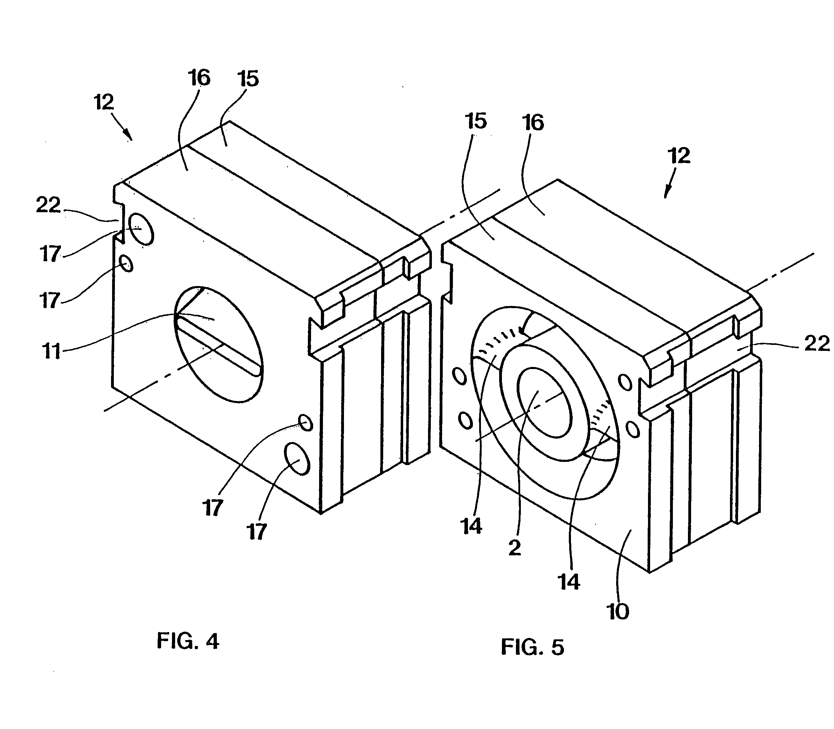

Ainsi qu'il apparaît plus clairement aux fig. 3 et 5, le méplat 11 est fixé dans la pièce amovible 12 par l'intermédiaire d'ailettes de support 14.

La pièce amovible 12, pour des raisons de facilité d'usinage du méplat 11, est réalisée en deux parties 15, 16 qui sont associées entre elles au moyen de dispositifs de fixation 17.

Ainsi qu'il apparaît à la fig. 1, une seconde pièce amovible 18 comportant également un méplat 19 est disposée dans le conduit de guidage 13 contre la pièce amovible 12 et est maintenue en place par un poussoir pneumatique 20.

Pour mettre en service cette seconde pièce amovible 18 en lieu et place de la pièce amovible 12, il suffit de provoquer un déplacement contrôlé du poussoir pneumatique 20 de façon telle que cette pièce soit amenée dans la position occupée par la pièce amovible 12, c'est-à-dire en position coaxiale avec le canal central 2. Ce déplacement doit être effectué à une vitesse relativement élevée pour minimiser toute perturbation dans l'écoulement des flux de matières thermoplastiques fondues.

Lors de ce déplacement, la pièce amovible 12 est progressivement mise hors service sous la poussée de la pièce amovible 18 et, lorsque cette dernière est en place, la pièce amovible 12 peut être retirée du conduit de guidage 13 au moyen d'un extracteur 21 équipé de mâchoires mobiles qui peuvent coopérer avec des encoches d'extraction 22 prévues dans la pièce amovible 12. Cette pièce amovible 12 peut alors être nettoyée en vue d'une remise en service ultérieure.

Il apparaît dès lors que le bloc d'alimentation décrit autorise un remplacement aisé du méplat assurant la modification géométrique d'un flux de matière thermoplastique fondue s'écoulant dans le canal central.

Le bloc d'alimentation qui vient d'être décrit peut faire l'objet de nombreuses variantes de réalisation.

Ainsi le canal 2 peut être de section rectangulaire ou autre.

Le conduit de guidage 13 peut être conçu pour contenir une pluralité de pièces amovibles identiques ou différentes en ce qui concerne le méplat, ces pièces pouvant être mises successivement en service.

Les pièces amovibles peuvent être équipées de moyens de centrage assurant une mise en service correcte et/ou de moyens assurant une étanchéité parfaite vis-à-vis des flux de matières thermoplastiques fondues débités.

Le conduit de guidage 13 peut être équipé de moyens de chauffage assurant une mise en température adéquate des pièces amovibles successives avant leur mise en service et/ou de moyens assurant une mise sous vide des pièces amovibles avant leur mise en service.

Enfin, le bloc d'alimentation peut être équipé d'une pluralité de dispositifs permettant le remplacement de méplats à plusieurs niveaux et être pourvu d'un dispositif d'alarme signalant toute mise en place incorrecte d'une pièce amovible équipée d'un méplat.

## Revendications

1. Bloc d'alimentation (1) pour filière plate de coextrusion comportant un canal central (2) comprenant une entrée raccordable à une première source d'alimentation en matière thermoplastique fondue et une sortie raccordable à la filière plate de coextrusion et au moins un canal secondaire comprenant une entrée raccordable à une seconde source de matière thermoplastique fondue, un tore de répartition (7) entourant le canal central et une sortie raccordée avec le canal central (2) en amont de la filière plate de coextrusion dans lequel le canal central (2) au niveau du raccordement avec au moins un canal secondaire (10) est équipé d'un méplat (11) modifiant sa section, caractérisé en ce que le méplat (11) est monté dans une pièce amovible (12) coaxiale au canal central (2) et disposée dans un conduit de guidage (13) interceptant le canal central (2) et traversant de part en part le bloc d'alimentation, ledit bloc d'alimentation (1) étant en outre équipé de moyens (20, 21) permettant l'extraction progressive de la pièce amovible (12) via le conduit de guidage (13) et son remplacement par une autre pièce amovible (18) équipée d'un méplat (19) et préalablement introduite dans le conduit de guidage (13).

2. Bloc d'alimentation selon la revendication 1, caractérisé en ce que le moyen permettant l'extraction de la pièce amovible (12) est constitué par un extracteur (21).

3. Bloc d'alimentation selon la revendication 2, caractérisé en ce que l'extracteur (21) est équipé de mâchoires mobiles coopérant avec des encoches (22) prévues dans la pièce amovible (12).

4. Bloc d'alimentation selon l'une quelconque des revendications 1 à 3, caractérisé en ce que le noyau permettant le remplacement de la pièce amovible (12) est constitué par un poussoir (20) se déplaçant selon l'axe du conduit de guidage (13).

5. Bloc d'alimentation selon la revendication 4, caractérisé en ce que le poussoir (20) est déplacé à une vitesse d'au moins 5 cm/sec.

6. Bloc d'alimentation selon l'une quelconque des revendications 1 à 5, caractérisé en ce que le conduit de guidage (13) est équipé de moyens de chauffage pour les pièces amovibles.

7. Bloc d'alimentation selon l'une quelconque des revendications 1 à 6, caractérisé en ce qu'il est équipé d'un moyen d'alarme en cas de blocage d'une pièce amovible (12, 18) dans le conduit de guidage (13).

8. Bloc d'alimentation selon l'une quelconque des revendications 1 à 7, caractérisé en ce que le conduit de guidage (13) est équipé de moyens assurant la mise sous vide des pièces amovibles (18) avant leur mise en service.

9. Bloc d'alimentation selon l'une quelconque des revendications 1 à 8, caractérisé en ce que le conduit de guidage (13) est équipé de moyens assurant le verrouillage en place de la pièce amovible (12) en service.

## Patentansprüche

1. Beschickungsblock (1) für eine Breitschlitz-Koextrudierdüse umfassend einen zentralen Kanal (2) mit einem Einlass, der mit einer ersten Beschickungsquelle geschmolzenen thermoplastischen Materials verbindbar ist, und einem Auslass, der mit der Breitschlitz-Koextrudierdüse verbindbar ist, und wenigstens einen zweiten Kanal mit einem Einlass, der mit einer zweiten Quelle geschmolzenen thermoplastischen Materials verbindbar ist, einer Verteilungsringfläche (7), die den zentralen Kanal umschliesst, und einem Auslass, der mit dem zentralen Kanal (2) stromaufwärts von der Breitschlitz-Koextrudierdüse verbunden ist, wobei der zentrale Kanal (2) auf der Höhe der Verbindung mit wenigstens einem zweiten Kanal (10) mit einer seinen Querschnitt verändernden Anflachung (11) ausgestattet ist, dadurch gekennzeichnet, dass die Anflachung (11) in einem beweglichen Teil (12) montiert ist, das koaxial zum zentralen Kanal (2) liegt und in einem Führungskanal (13), der den zentralen Kanal (2) schneidet und den Beschickungsblock vollkommen durchquert, angeordnet ist, wobei dieser Beschickungsblock (1) ausserdem mit Einrichtungen (20, 21) ausgestattet ist, die das fortschreitende Herausziehen des beweglichen Teils (12) über den Führungskanal (13) und seinen Ersatz durch ein anderes bewegliches Teil (18), das mit einer Anflachung (19) ausgestattet ist und vorhergehend in den Führungskanal (13) eingeführt worden ist, erlauben.

2. Beschickungsblock nach Anspruch 1, dadurch gekennzeichnet, dass die Einrichtung, welche das Herausziehen des beweglichen Teils (12) erlaubt, aus einem Extraktor (21) besteht.

3. Beschickungsblock nach Anspruch 2, dadurch gekennzeichnet, dass der Extraktor (21) mit beweglichen Backen ausgestattet ist, die mit Nuten (22), die in dem beweglichen Teil (12) vorgesehen sind, zusammenwirken.

4. Beschickungsblock nach einem der Ansprüche 1 bis 3, dadurch gekennzeichnet, dass die Einheit, die den Ersatz des beweglichen Teils (12) erlaubt, aus einem Ausstosser (20), der sich entlang der Achse des Führungskanals (13) verschiebt, besteht.

5. Beschickungsblock nach Anspruch 4, dadurch gekennzeichnet, dass sich der Ausstosser (20) mit einer Geschwindigkeit von mindestens 5 cm/sek verschiebt.

6. Beschickungsblock nach einem der Ansprüche 1 bis 5, dadurch gekennzeichnet, dass der Führungskanal (13) mit Heizeinrichtungen für die beweglichen Teile ausgestattet ist.

7. Beschickungsblock nach einem der Ansprüche 1 bis 6, dadurch gekennzeichnet, dass er mit einer Alarmeinrichtung, im Falle der Blockierung eines beweglichen Teils (12, 18) in dem Führungskanal (13), ausgestattet ist.

8. Beschickungsblock nach einem der Ansprüche 1 bis 7, dadurch gekennzeichnet, dass der Führungskanal (13) mit Einrichtungen ausgerüstet ist, die den Einsatz der beweglichen Teile (18) im Vakuum vor ihrer Inbetriebnahme sicherstellen.

9. Beschickungsblock nach einem der Ansprüche 1 bis 8, dadurch gekennzeichnet, dass der Führungskanal (13) mit Einrichtungen ausgerüstet ist, die die Verriegelung am Ort des beweglichen Teils (12) im Betrieb sicherstellen.

## Claims

1. Feed block (1) for a flat coextrusion die, comprising a central channel (2) possessing an inlet which can be connected to a first feed source of molten thermoplastic, an outlet which can be connected to the flat coextrusion die and at least one secondary channel possessing an inlet which can be connected to a second source of molten thermoplastic, a distribution torus (7) surrounding the central channel and an outlet connected to the central channel (2) upstream of the flat coextrusion die, in which the central channel (2), in the zone where it connects to at least one secondary channel (10), is equipped with a flat portion (11) which alters its cross-section, characterized in that the flat portion (11) is mounted in a removable piece (12) coaxial with the central channel (2) and arranged in a guide tube (13) which intersects the central channel (2) and runs from one side of the feed block to the other, the said feed block (1) being moreover equipped with means (20, 21) which make it possible gradually to withdraw the removable piece (12) via the guide tube (13) and to replace it by another removable piece (18) equipped with a flat portion (19) and introduced beforehand into the guide tube (13).

2. Feed block according to Claim 1, characterized in that the means which allow the removable piece (12) to be withdrawn consists of an extracting device (21).

3. Feed block according to Claim 2, characterized in that the extracting device (21) is equipped with movable jaws which cooperate with notches (22) provided in the removable piece (12).

4. Feed block according to any one of Claims 1 to 3, characterized in that the core which allows the removable piece (12) to be replaced consists of a plunger (20) which travels along the axis of the guide tube (13).

5. Feed block according to Claim 4, characterized in that the plunger (20) travels at a speed of at least 5 cm/sec.

6. Feed block according to any one of Claims 1 to 5, characterized in that the guide tube (13) is equipped with means of heating the removable pieces.

7. Feed block according to any one of Claims 1 to 6, characterized in that it is equipped with a means of alarm in the event of a removable piece (12, 18) becoming blocked in the guide tube (13).

8. Feed block according to any one of Claims 1 to 7, characterized in that the guide tube (13) is equipped with means which ensure that the removable pieces (18) are placed under vacuum before being put into service.

9. Feed block according to any one of Claims 1 to 8, characterized in that the guide tube (13) is equipped with means which lock the removable piece (12) in position when in service.

FIG. 3

FIG. 1

FIG. 2

FIG. 4

FIG. 5